# EUROPEAN PATENT APPLICATION

(11) **EP 2 529 823 A1**
(43) Date of publication of application: **05.12.2012**
(21) Application number: 12169436.8
(22) Date of filing: 25.05.2012
(51) Int. Cl.: B01D 46/02, B01D 46/24, B01D 46/00, B01D 46/42, B03C 3/00

(54) **Filter module**

(30) Priority: 31.05.2011 IT MI20110997
(71) Applicant: Barberi, Marco, 20028 San Vittore Olona (MI) (IT)
(72) Inventor: Barberi, Marco, 20028 San Vittore Olona (MI) (IT)
(74) Representative: Vanosi, Adelio Valeriano

(57) **Abstract**

A filter module to be housed in an environment at controlled temperature, comprising a casing internally provided with a filtration compartment comprising at least one filter element, and with a suction compartment. Between the filtration compartment and the suction compartment there is provided a recovery compartment housing a heat exchanger through which the filtered air stream passes from the filtration compartment to the suction compartment, the recovery compartment being provided with an electric fan to withdraw air from outside the module and convey it through the heat exchanger to the outside of a room housing the filtration device.

## Description

The present invention relates to a filter module.

More particularly it relates to a filter module to be housed within a production environment at conditioned temperature.

Filter modules positioned within production environments are known. They are constructed mainly in column form to minimize their required floor space. Normally they present a casing comprising a first filtration compartment positioned in the lower part of the casing. The filtration compartment is provided with a hopper positioned below one or more filters (preferably of cartridge type), for discharging the discarded material (dust). It also presents a contaminated air entry aperture. This aperture is connected by suitable pipes to production machines such as grinders, machine tools in general, painting cabins, processing machines for plastics, asbestos, coal, lampblack, etc. The contaminated air entry aperture can be connected by suitable pipes to suction hoods positioned in zones where processes take place creating dust or pollution, specifically in the field of loose materials handling or welding.

Above the filtration compartment a suction compartment is positioned housing an electric fan which puts the filtration compartment under vacuum.

The electric fan presents a delivery port which opens towards the outside of the building.

A problem of traditional filter modules is that the contaminated air which is drawn from the interior of the environment at conditioned temperature is expelled to the outside and has therefore to be replenished to the environment interior after suitable warming or cooling, depending on the current season. This involves a considerable energy cost.

US3945400A and DE2604494A1 describe a filtering module in which the air used for washing the filters in counter-flow is pre-heated by the hot gas leaving the filters. This is in order to avoid condensation of the filters.

An object of the present invention is therefore to provide a filter module which represents an improvement over the known art by minimizing the energy cost of thermally conditioning the air replenished to the interior of the building in which the filter module is housed and from which the filter module withdraws the contaminated air to be filtered.

This and other objects are attained by a filter module formed in accordance with the technical teachings of the accompanying claims. Advantageously the invention provides a compact module of small overall plan dimensions, which can be easily housed in an environment at controlled temperature.

Another advantage of the present invention is that the filter module can be installed very rapidly within the working environment without having to make complex pipe connections between the various module components. Further characteristics and advantages of the invention will be evident from the description of a preferred but non-exclusive embodiment of the filter module, illustrated by way of non-limiting example in the accompanying drawings, in which:

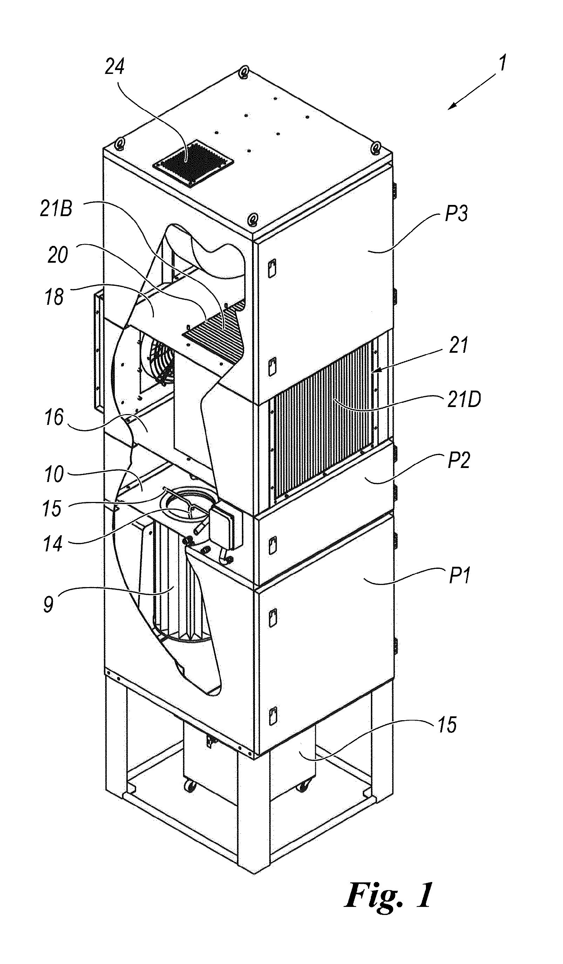

Figure 1 is a partially sectional perspective view of the filter module according to the present invention;

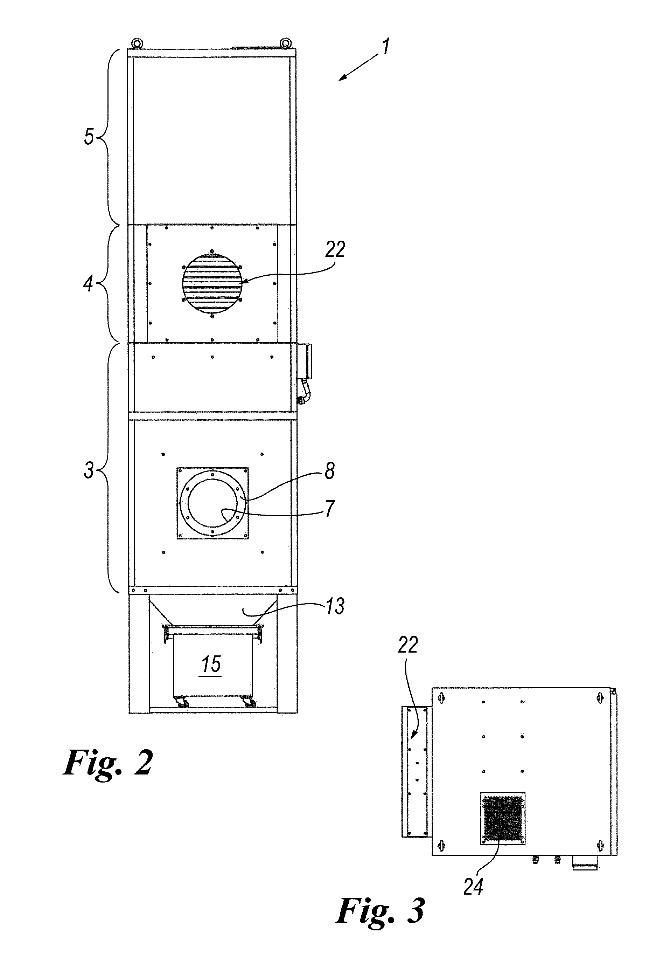

Figure 2 is a rear view of the module of Figure 1;
Figure 3 is a view of the module of Figure 1 from above;

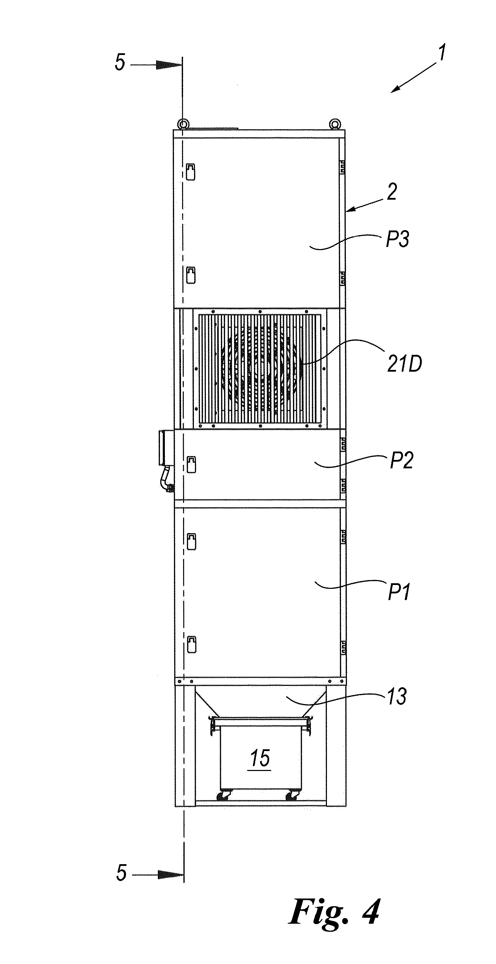

Figure 4 is a front view of the module of Figure 1, and;

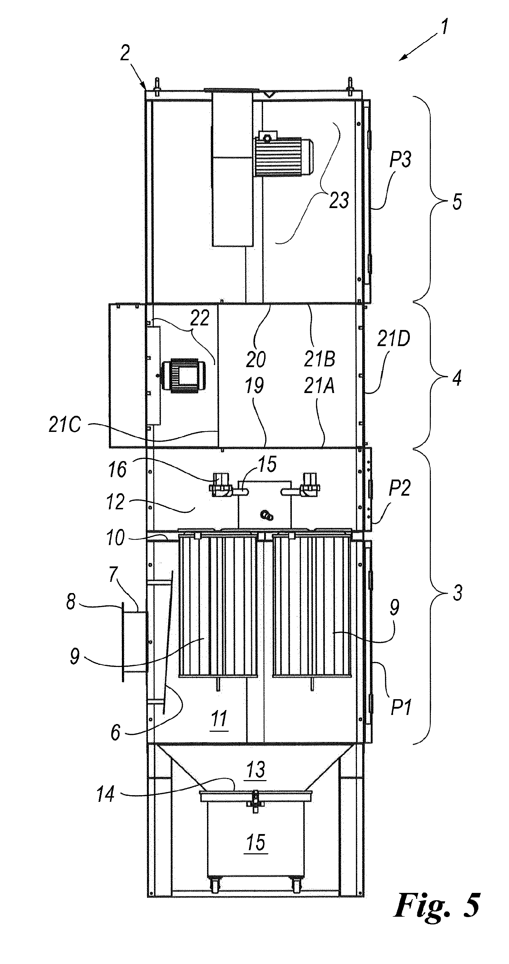

Figure 5 is a section taken on the line 5-5 of Figure 4.

With reference to said figures, these show a filter module indicated overall by the reference numeral 1.

The module comprises a casing 2 inside which a filtration compartment 3, a suction compartment 5 and a thermal recovery compartment 4 are provided.

The filtration compartment comprises a contaminated air entry aperture 6 connected to a pipe 7. The aperture faces filter elements, namely filter cartridges 9 in this specific case. The filter cartridges 9 are fixed to a first baffle 10. The cartridges 9 and baffle 10 hence divide the filtration compartment into a first chamber 11 and a second chamber 12.

At the base of the first chamber 11 a hopper 13 is positioned, in the base of which a dust discharge aperture 14 is provided. The dust discharge aperture can be sealedly associated with a trolley 15 adapted to collect the residues and solid particles deriving from the filtration.

In an alternative embodiment, the discharge aperture is associated with a rotary discharger.

The hopper is located below the filter elements.

Filter cleaning means are provided inside the second chamber 12. In the illustrated embodiment, given that the filters are of cartridge type, the cleaning means comprise pipes 15 and nozzles 14 fed with compressed air for cleaning the filters in counter-flow. The pipes are intercepted by suitable solenoid valves 16. As several filters are provided, cleaning takes place at regular intervals only on one of the filters at a time, so as not to compromise the operation of the equipment, which must continue to operate during cleaning of any one of the filters.

Above the filtration compartment a recovery compartment 4 is provided. It is bounded perimetrally by the side walls of the casing, lowerly by a second baffle 16 and upperly by a third baffle 18.

The second and third baffle each comprise a window 19, 20, sealedly coupled respectively to the inlet and outlet of a heat exchanger 21. Essentially, the heat exchanger air inlet 21 A coupled to the second baffle communicates with the filtration compartment, while the heat exchanger outlet communicates with the suction compartment 5 described hereinafter.

Consequently the heat exchanger 21 constitutes an obligatory and unique passage for the air flowing from the filtration compartment to the suction compartment.

The heat exchanger 21 also comprises a further inlet 21C and a further outlet 21 D for the external air which exchanges heat with the air which has just been filtered.

In particular, the further outlet 21D is disposed on an external face of the casing which opens into the environment at conditioned temperature, while the further inlet 21C is positioned in the interior of the recovery compartment. The further outlet 21D is advantageously provided with a noise attenuator.

Air originating from the outside of the building or from the environment surrounding the filter module is drawn into the recovery compartment 4 and forced by an electric fan 22 through the further inlet 21C of the heat exchanger 21.

It should be noted that the heat exchanger 21 is preferably of the crossflow, corrugated plate structure type.

This heat exchanger presents an extremely important characteristic, name that of being able to resist a maximum negative pressure of 3800 Pa. Above the recovery compartment 4 a suction compartment 5 is provided. It comprises an electric fan 23 able to put under vacuum the interior of the casing 2 and in particular, via the heat exchanger, the filtration compartment. In other words, the intake port of the electric fan is disposed in the suction compartment and is hence in communication with the filtration compartment via the heat exchanger.

The electric fan 23 comprises a filtered air outlet (delivery) port 24. When the module is properly installed, this port must be connected to the outside of the building.

In concluding the description it should be noted that the module in question comprises a plurality of doors P1, P2 and P3 which allow inspection of the filtration compartment 3 (via the doors P1, P2 respectively bounding the first chamber 11 and the second chamber 12) and the suction compartment 5 (via the door P3).

The operation of the invention is apparent to the expert of the art from the aforegoing description, and in particular is as follows.

The filter module 1 is firstly installed inside a building at controlled temperature, such as a laboratory or a factory.

The contaminated air inlet aperture is connected by suitable pipes for example to suction arms which terminate in hoods positioned above one or more welding stations.

The aperture 24 is connected by suitable pipes to the environment outside the building (for example a discharge stack).

The electric fan 22, or rather a suction port thereof, is connected to the environment outside the building in which the module is installed.

The electric fan 23 and the electric fan 22 are operated.

Air is drawn in from the welding stations through the contaminated air inlet. It is filtered by the cartridge filters 9 and on leaving the filters is drawn through the heat exchanger 21. Within the heat exchanger the purified air transfers heat to the air originating from the outside, which is fed into the environment in which the filter module is installed through the further outlet 21 D.

The purified air then enters the electric fan 23 and is expelled to the outside environment via the port 24.

In this manner a large part of the heat of the just purified air is recovered and is transferred to the pure air which is drawn from the outside and then fed into the conditioned temperature environment in which the filter module is located, this resulting in a considerable saving in the costs of heating the controlled temperature environment.

Again, when the working environment has a temperature less than the outside temperature (for example when working in a cooled environment), a considerable energy saving is also achieved.

Positioning the heat exchanger in a position between the electric fan and the filtration compartment has the advantage of improving heat recovery. This is because the filtered air exchanges heat at the first useful point after filtration.

A preferred embodiment of the filter module has been described, however others can be conceived utilizing the same inventive concept.

For example the filtration compartment can be equipped with other filter types according to requirements. Thus the filter cartridges can for example be replaced by static or sleeve filters.

## Claims

1. A filter module to be housed in an environment at controlled temperature, comprising a casing in which a filtration compartment is provided, said filtration compartment comprising at least one filter element, a contaminated air inlet aperture and a dust discharge aperture, and in which a suction compartment is also provided, housing an electric fan having a suction port communicating with the filtration compartment, and a delivery port opening to the outside of the module, **characterised by** comprising, between the filtration compartment and the suction compartment, a recovery compartment housing a heat exchanger through which the filtered air stream passes from the filtration compartment to the suction compartment, the recovery compartment being provided with an electric fan to withdraw air from outside the module and convey it through the heat exchanger to the inside of the environment at controlled temperature housing the filter module.

2. A module as claimed in the preceding claim, wherein the filtration compartment comprises cleaning means for the filters, said means comprising compressed air nozzles for their cleaning in counter-flow, and/or mechanical shakers.

3. A module as claimed in one or more of the preceding claims, wherein each compartment is provided with at least one sealedly closable inspection door.

4. A module as claimed in one or more of the preceding claims, wherein said discharge aperture is associated with a refuse discharge trolley and/or a rotary discharger.

5. A module as claimed in one or more of the preceding claims, wherein the filtration compartment, the recovery compartment and the suction compartment are mutually superposed to form a filtration column.

6. A module as claimed in the preceding claim, wherein the compartments have the same plan dimensions.

7. A module as claimed in one or more of the preceding claims, wherein the filtration compartment comprises a hopper, in the base of which said discharge aperture is provided.

8. A module as claimed in one or more of the preceding claims, wherein said filtration compartment comprises a first chamber provided with said discharge port, and a second chamber provided with said cleaning means, the first and second chamber being separated by a baffle to which said filter element is fixed.

9. A module as claimed in one or more of the preceding claims, wherein said at least one filter element is of the cartridge type and/or sleeve type and/or static filter type.
